# EUROPÄISCHE PATENTSCHRIFT

(11) **EP 1 660 568 B1**
(45) Veröffentlichungstag und Bekanntmachung des Hinweises auf die Patenterteilung: **12.10.2011**
(21) Anmeldenummer: 04764621.1
(22) Anmeldetag: 30.08.2004
(51) Int. Cl.: B01L 3/00, C08J 7/12

(54) **HYDROPHOBER GEGENSTAND MIT RASTER HYDROPHILER BEREICHE, DESSEN HERSTELLUNG UND VERWENDUNG**
HYDROPHOBIC OBJECT COMPRISING A GRID OF HYDROPHILIC REGIONS, PRODUCTION OF SAID OBJECT, AND USE OF THE SAME
PRODUIT HYDROPHOBE COMPORTANT UNE GRILLE DE ZONES HYDROPHILES, FABRICATION ET UTILISATION

(30) Priorität: 02.09.2003 DE 10340429
(43) Veröffentlichungstag der Anmeldung: 31.05.2006
(73) Patentinhaber: Helmholtz-Zentrum für Infektionsforschung GmbH, 38124 Braunschweig (DE)
(72) Erfinder: FRANK, Ronald, 38124 Braunschweig (DE); ZANDER, Norbert, 38124 Braunschweig (DE); BEUTLING, Ulrike, 38124 Braunschweig (DE); SWISTOWSKI, Andrzej, 38124 Braunschweig (DE); BIALEK, Krzysztof, 38124 Braunschweig (DE)
(74) Vertreter: Boeters, Hans Dietrich
(86) Internationale Anmeldenummer: PCT/EP2004/009655
(87) Internationale Veröffentlichungsnummer: WO 2005/023915

(56) Entgegenhaltungen:
- EP-A- 0 402 718
- WO-A-00/12575
- WO-A-97/22875
- WO-A-98/03257
- WO-A-99/55455

## Beschreibung

Sammlungen von großen Zahlen unterschiedlicher Sonden bzw. Sondenmolekülen bzw. Testverbindungen, die auf einer ebenen Fläche geordnet/gebunden/immobilisiert sind, werden im wissenschaftlichen Sprachgebrauch als Arrays bezeichnet. Solche Arrays erlauben einen schnellen simultanen Test/Assay aller Sonden/Sondenmoleküle/Testverbindungen durch Interaktionsanalyse mit einem oder einer Mischung von Analyten in biologischen Proben, d.h. Ziel-Biomolekülen. Der Vorteil eines Arrays gegenüber dem simultanen Test/Assay mit immobilisierten Sonden bzw. Sondenmolekülen bzw. Testverbindungen auf beweglichen Elementen, wie z.B. auf Perlen (Beads), besteht darin, daß in einem Array die Art (chemische Struktur und/oder Identität) der immobilisierten Sonden bzw. Sondenmoleküle bzw. Testmoleküle genau durch den Ort in der Arrayfläche bekannt ist und ein örtliches Testsignal (dieses kann durch Wechselwirkung mit dem Ziel-Biomolekül entstehen, z.B. durch Bindung, oder z.B. durch enzymatische Umsetzung der Sonde durch das Ziel-Biomolekül verschwinden und somit direkt zum Nachweis dienen) somit sofort einer Molekülart zugeordnet werden kann. Insbesondere in miniaturisierter Form werden Arrays mit biologischen Sonden bzw. Sondenmolekülen bzw. Testmolekülen auch Biochips genannt.

Wichtige Beispiele für solche Arrays sind:
- Nukleinsäure Arrays aus DNA-Fragmenten, cDNAs, RNAs, PCR-Produkten, Plasmiden, Bakteriophagen, synthetischen PNA-Oligomeren, welche mittels Hybridisierung (Bildung eines Doppelstrangmoleküls) zu komplementären Nukleinsäureanalyten ausgelesen werden;
- Protein-Arrays aus Antikörpern, in Zellen expremierten Proteinen, Phagen-Fusionsproteinen ("Phage Display") und
- Verbindungsarrays aus synthetischen Peptiden, deren Analoga wie Peptoide, Oligo-Carbamate usw. oder allgemein organisch chemischen Verbindungen, welche beispielsweise mittels Bindung zu affinen Protein- oder anderen Analyten oder beispielsweise mittels enzymatischer Umsetzung ausgelesen werden.

Solche Arrays werden zur Zeit nach zwei verschiedenen Prinzipien durch Ablegen der Sonden bzw. Sondenmolekülen bzw. Testverbindungen auf bereits vorbereitete Materialoberflächen hergestellt (eine Übersicht gibt S. Wölfl in: transcript Laborwelt 2000, 3, 13-20):
- durch einmaliges Verteilen der Lösungen vorgefertigter Sonden bzw. Sondenmolekülen bzw. Testverbindungen auf der Oberfläche
- durch wiederholte serielle Verteilung der Lösungen von Bausteinen für die chemische Synthese der Sonden bzw. Sondenmolekülen bzw. Testverbindungen in situ auf der Oberfläche.

Die Oberfläche mit den gebundenen Sondenmoleküle wird dann ganzflächig mit der Lösung der Ziel-Biomoleküle in Kontakt gebracht, wodurch bei erfolgter spezifischer Wechselwirkung beispielsweise ein optisches oder radioaktives Signal erzeugt wird, welches dann ausgelesen wird. Überwiegend werden solche Arrays nur einmal verwendet. Wenn die Verknüpfung der Sondenmoleküle auf der Oberfläche kovalent und stabil wäre, dann könnte nach Abwaschen der gebundenen Ziel-Biomoleküle mit Detergenzien oder anderen mehr spezifischeren Reagenzien/Kompetitoren ein solches Array wiederverwendet werden. Dies ist bei den heutigen, fast ausschließlich auf Glas basierten Arrays nicht möglich, weil die verwendeten Si-O-R Bindungen hydrolyseempfindlich sind.

Außerdem beschränkt sich diese Art Nutzung der Arrays nur auf den Nachweis des Vorhandenseins und der differentiellen Quantifizierung der Ziel-Biomoleküle in der Analytmischung (biologische Probe). Viele Anwendungen würden aber sehr von einem Arrayformat profitieren, wenn die Zielmoleküle ortgerichtet eluiert und weiter verwendet oder analysiert werden könnten. Solche Anwendungen können als multiple Affinitätsanreicherungsexperimente bezeichnet werden. Beispiele dafür sind:
- Trennung von polyklonalen Antiseren in monospezifische epitopgerichtete Subpopulationen (Valle M, Kremer L, Martinez C, Roncal F, Valpuesta JM, Albar JP, Carrascosa JL (1999) Domain architecture of the bacteriophage Φ29 connector protein, J Mol Biol 288:899-909)
- Trennung von Protein- oder Nucleinsäuregemischen in ligandspezifische Subpopulationen
- Trennung von proteinpräsentierenden Bakteriophagen in ligandspezifiasche Subpopulationen (Epitope-targeted proteome analysis: Towards a large-scale automated protein-proteininteraction mapping utilizing synthetic peptide arrays - Bialek, K., Swistowski, A. and Frank, R. (2003) Analytical and Bioanalytical Chemistry, Band 376: 1006.-1013).

Bisher ist eine solche multiple Affinitätsanreicherung nur möglich , wenn das Array schon vor, aber spätestens nach der Inkubation mit der biologischen Probe in ortsselektive Teile zerlegt wird und von diesen die Ziel-Biomoleküle separat individuell eluiert werden. Diese Zerteilung ist notwendig weil sonst das aufgegebene Elutionsreagenz von einem Ort zu den benachbarten Orten verlaufen oder diffundieren würde und damit die abgelösten Ziel-Biomoleküle sich vermischen würden.

Für eine anschließende Isolierung der Ziel-Biomoleküle vom Array, mit gleichzeitigem Erhalt der Information, an welches Sondenmolekül bevorzugt gebunden wurde, ist es z.B. bei einem Array auf Cellulose nötig, dieses Array zu zerschneiden, um die Ziel-Biomoleküle von jedem Sondenmolekül einzeln isolieren zu können. Dieses Array ist damit jedoch vollständig zerstört und nicht mehr für die weitere simultane Analyse von komplexen Biogemischen brauchbar. Eine entsprechende Zerteilung von Arrays auf Glasträgern wäre ungleich aufwendiger und technisch wohl kaum durchführbar. Eine Automatisierung des Prozesses der Zerlegung und separaten Elution wäre auch sehr aufwendig, weil er komplizierte mechanische Schritte umfasst.

Aufgabe der Erfindung ist es, eine strukturiert funktionalisierte Kunststoffoberfläche für die automatisierte parallele *in situ* Synthese oder Immobilisierung einer Vielzahl 5 von Sondenmolekülen vorzusehen, welche deren anschließende Anwendung für die automatisierte simultane Affinitätsanreicherung und Isolierung biologischer Analyt-Moleküle aus komplexen Gemischen ermöglicht.

So wird die der Erfindung zugrundeliegende Aufgabe gelöst durch einen

Gegenstand aus einem hydrophoben Kunststoff und mit planer Oberfläche, die mit einer Vielzahl von hydrophilen Bereichen versehen ist, die voneinander durch hydrophobe Barrieren/Stege der nicht-modifizierten Kunststoffoberfläche, deren Ausdehnung ¹/₁₀ bis ¹⁰/₁₀ der kleinsten Ausdehnung eines hydrophilen Bereichs beträgt, abgegrenzt sind, wobei die Kunststoffoberfläche für die Immobilisierung oder Bindung von Sondenmolekülen zur Funktionalisierung mit Hydroxy-Gruppen einer Plasma-Behandlung oder einer Ozonolyse unterworfen worden ist.

Bei dem erfindungsgemäßen Gegenstand kann die Vielzahl hydrophiler Bereiche und die hydrophoben Barrieren ein Raster bilden.

Bei dem erfindungsgemäßen Gegenstand kann es sich bei dem Kunststoff um Polyethylen (PE), Polypropylen (PP), Polymethylpenten (PMP), Polytetrafluorethylen (PTFE; Teflon) oder Polyamid handeln.

Der erfindungsgemäße Gegenstand kann gefärbt sein.

Bei dem erfindungsgemäßen Gegenstand kann der Kunststoff einen Gehalt an anorganischem Material, insbesondere Graphit, und/oder organischem Material, insbesondere an inertem anorganischem und/oder organischem Material aufweisen.

Der erfindungsgemäße Gegenstand kann als Flachmaterial vorgesehen sein, das gegebenenfalls auf einem Träger aufgebracht ist.

Der erfindungsgemäße Gegenstand kann als Folie vorgesehen sein.

Bei dem erfindungsgemäßen Gegenstand kann die Größe jedes hydrophilen Bereichs einem von einer Pipette abgebbaren und den Bereich benetzenden Flüssigkeitsvolumen oder der Größe einer lebenden Zelle entsprechen.

Bei dem erfindungsgemäßen Gegenstand können die hydrophilen Bereiche Sondenmoleküle tragen, die zu einer simultanen Affinitätsanreicherung und Isolierung von Analyt-Molekülen geeignet sind.

Bei dem erfindungsgemäßen Gegenstand können die Sondenmoleküle auf den hydrophilen Bereichen immobilisiert oder an die hydrophilen Bereiche gebunden sein.

Bei dem erfindungsgemäßen Gegenstand kann die Kunststoffoberfläche für die Immobilisierung oder Bindung von Sondenmolekülen funktionalisiert, insbesondere mit funktionellen Gruppen versehen sein bzw. versehen worden sein.

Zur Funktionalisierung kann eine Maske vorgesehen worden sein, welche den vorzusehenden hydrophoben Barrieren entspricht bzw. diese hydrophoben Barrieren vorgibt, und der maskierte Gegenstand, soweit er nicht maskiert worden ist, kann einer Funktionalisierung unter Ausbildung der hydrophilen Bereiche unterworfen worden sein.

Bei dem erfindungsgemäßen Gegenstand kann die Kunststoffoberfläche mit Hydroxy-, Amino- (insbesondere NH₂-Gruppen), Carboxyl-, Aldehyd- oder Keto-Gruppen als funktionellen Gruppen versehen sein bzw. versehen worden sein in.

Bei dem erfindungsgemäßen Gegenstand kann die Oberfläche mit 0,5 bis 15 und insbesondere 0,1 bis 13,5 nanomol Hydroxy-Gruppen/cm² versehen sein bzw. versehen worden sein.

Bei dem erfindungsgemäßen Gegenstand kann die Kunststoffoberfläche weiterhin mit funktionellen Gruppen versehen sein bzw. versehen worden sein, indem eine mit funktionellen Gruppen versehene Polymerschicht auf die funktionalisierte Kunststoffoberfläche aufgepfropft worden ist.

Dabei kann das Aufpfropfen in Abwesenheit von Vernetzern, insbesondere von bifunktionellen Monomeren durchgeführt worden sein.

Bei dem erfindungsgemäßen Gegenstand können die Sondenmoleküle auf die funktionalisierte Kunststoffoberfläche durch Synthese, durch Immobilisierung oder durch Adhäsion aufgebracht sein bzw. aufgebracht worden sein.

Bei dem erfindungsgemäßen Gegenstand können die Sondenmoleküle durch eine Stufensynthese aufgebracht sein bzw. aufgebracht worden sein.

Bei dem erfindungsgemäßen Gegenstand können die Sondenmoleküle durch chemische Bindung immobilisiert" sein bzw. immobilisiert worden sein, insbesondere über einen Linker.

Bei dem erfindungsgemäßen Gegenstand können die Sondenmoleküle nicht abwaschbar adhäsiv aufgebracht sein bzw. aufgebracht worden sein.

Bei dem erfindungsgemäßen Gegenstand können als Sondenmoleküle Peptide, Peptid-Analoge, insbesondere Peptoide und/oder Peptomere, PNA, Oligonucleotide, DNA, organische Moleküle, Naturstoffe und/oder Oligosaccharide aufgebracht sein bzw. aufgebracht worden sein.

Bei dem erfindungsgemäßen Gegenstand können die Sondenmoleküle von hydrophilem Bereich zu hydrophilem Bereich verschieden sein oder es können von hydrophilem Bereich zu hydrophilem Bereich verschiedene Sondenmolekül-Gemische vorgesehen sein.

Bei dem erfindungsgemäßen Gegenstand kann eine plane Oberfläche einer Größe im Bereich von 1 mm² bis 1 m², insbesondere von einigen mm² bis einigen cm² aufweisen.

Ferner wird die der Erfindung zugrundeliegende Aufgabe gelöst durch ein Verfahren zur Herstellung eines Gegenstandes aus Kunststoff und mit planer Oberfläche, die mit einer Vielzahl von hydrophilen Bereichen versehen ist, die voneinander durch hydrophobe Barrieren abgegrenzt sind, und der zur Beschickung mit Sondenmolekülen funktionalisiert worden ist, wobei man von einem hydrophoben Kunststoff ausgeht, den Gegenstand mit einer Maske versieht, welche den vorzusehenden hydrophoben Barrieren entspricht bzw. diese hydrophoben Barrieren vorgibt, und den Gegenstand, soweit er nicht maskiert worden ist, funktionalisiert, indem man hydrophilisiert.

Bei dem erfindungsgemäßen Verfahren kann man hydrophilisieren, indem man Hydroxy-, Amino-, Carboxyl-, Aldehyd- oder Keto-Gruppen vorsieht.

Bei dem erfindungsgemäßen Verfahren kann man den bereichsweise hydrophilisierten Gegenstand einer Pfropfpolymerisation unterwerfen, mit der man ihrerseits Hydroxy-, Amino-, Carb-oxyl-, Aldehyd- oder Keto-Gruppen vorsieht.

Bei dem erfindungsgemäßen Verfahren zur Herstellung eines Gegenstandes ums einem hydrophoben kunststoff kann man der gegenstand mit Sondenmolekülen versehen.

Schließlich wird die der Erfindung zugrundeliegende Aufgabe gelöst durch eine Verwendung eines erfindungsgemäßen Gegenstandes für eine simultane Affinitätsanreicherung oder Affinitätsreinigung und Isolierung von Analyt-Teilchen, insbesondere von biologischen Analyt-Teilcben, vorzugsweise Molekülen, Proteinen, Antikörpern, Nucleinsäuren, Phagen, Oligosacchariden oder Zellen.

Bei der erfindungsgemäßen Verwendung kann man nach der Affnitätsanreicherung oder Affinitätsreinigung individuell pro hydrophilem Bereich eine Elutionslösung aufbringen und das jeweilige Analyt-Teilchen isolieren.

Bei der erfindungsgemäßen Verwendung kann man die Affinitätsanreicherung oder Affinitätsreinigung und/oder die Isolierung der Analyt-Teilchen automatisiert durchführen.

Bei der erfindungsgemäßen Verwendung kann man den von Analyt-Teilchen befreiten Gegenstand erneut zur Affinitätsanreicherung oder Affinitätsreinigung verwenden.

Erfindungsgemäß werden also auf einer homogen hydrophoben Kunststoffoberfläche homogen hydrophile Bereiche/Patches aufgebracht, die dann durch die hydrophoben Barrieren/Stege der nicht modifizierten Kunststoffoberfläche ausreichend untereinander abgetrennt sind. Die Größenverhältnisse der hydrophilen und hydrophoben Bereiche wird so gewählt, dass zu jeder Zeit ein definiertes Volumen Flüssigkeit auf einen hydrophile Bereich aufpipettiert werden kann und dieses Volumen diesen hydrophilen Bereich mit der durch das hier beschriebene Verfahren frei wählbaren Form durch Benetzung selbstständig und vollständig ausfüllt und nicht über die hydrophoben Bereiche hinweg fließt. Die Flüssigkeitsvolumina, die dafür je hydrophilem Bereich eingesetzt werden können, sind durch die komplexen Verhältnisse der jeweiligen Oberflächenspannungen gegeben. Diese Volumina lassen sich aber leicht experimentell bestimmen, indem zunächst die ganze strukturierte Kunststoffoberfläche mit einem Überschuss Flüssigkeit überschichtet wird und dann durch leichte Schrägstellung der Überschuss abfließen kann; auf den hydrophilen Bereichen bleiben die Volumina durch Benetzung haften und können nach vorsichtigem Abnehmen vermessen werden. Dieses sehr einfache "Auto-Füllverfahren" der hydrophilen Bereiche lässt sich auch bei vielen Schritten der Affinitätsanreicherungsprozeduren vorteilhaft anwenden. Auf diesen hydrophilen Patches werden später die Sondenmoleküle in situ synthetisiert oder immobilisiert. Eine Übersicht zur Mikro- und Nanostrukturierung von Oberflächen zur Herstellung von hydrophoben und hydrophilen Strukturen gibt der Artikel "Softlithographie" von Xia, Y., Whitesides, G. M., Angewandte Chemie, 110, 568 (1998). Durch die hydrophob/hydrophil strukturierten Bereiche/Patches auf der Kunststoffoberfläche ist nach einer Affinitätsanreicherung der Ziel-Biomoleküle eine Isolierung dieser Ziel-Biomoleküle von jedem einzelnen Patch individuell möglich, ohne das Array zu zerstören, weil die aufgegebenen Volumina an Elutionslösung nicht von einem Bereich/Patch zum benachbarten fließen können. Das Array ist somit wiederverwendbar. Da die einzelnen Sondenmoleküle voneinander durch die hydrophoben Barrieren/Stege abgegrenzt sind, läßt sich die Elution der Ziel-Biomoleküle leicht automatisieren. Die Elutionslösung kann mit einer Pipette/Pipettierroboter aufgetragen und nach einer entsprechenden Einwirkzeit mit selbiger Pipette/Pipettierroboter wieder aufgenommen werden. Dies ortsaufgelöst für jedes einzelne Sondenmolekül.

Bekannte Verfahren machen sich solche hydrophob/hydrophilen Strukturen nutzbar, um z.B. eine Vielzahl an verschiedenen Molekülen gezielt auf vorbestimmte Punkte einer Fläche ablegen zu können und diese Moleküle später mittels Massenspektrometrie in Form von MALDI analysieren zu können (GB 2 332 273). Dabei werden als Grundlage Metalle, wie z.B. Siliziumwafer oder goldbeschichtete Targets verwendet. Die hydrophilen Bereiche (Punkte) werden durch aufbringen kleiner Tropfen hydrophiler Lacke erzeugt. Die Sondenmoleküle werden auf diesen Strukturen abgelegt, indem sie an Nanopartikel gebunden werden, die sich dann an den hydrophilen Bereichen der Oberfläche sammeln. Solche Flächen sind nicht für die feste kovalente Synthese oder Immobilisierung gedacht und geeignet.

Hydrophile Oberflächen, auf denen mit hydrophoben Lacken (Coating) hydrophobe Barrieren aufgebracht sind, sind in WO 98/03257 beschrieben für die parallele Durchführung von miniaturisierten Testreaktionen in kleinen, parallel angeordneten Flüssigkeitstropfen. Photolithographische Methoden, um mit positiven oder negativen Photolacken strukturierte Bereiche auf Glassträgern aufzubringen sind auch in WO 94/27719 beschrieben.

Auch sind bekannte Arrays, die auf dreidimensionalen Polyacrylamidgelpatches beruhen, bisher immer auf einer Glasoberfläche erzeugt worden. Siehe hierzu: "Manual Manufacturing of Oligonucleotide, DNA, and Protein Microchips" - Guschin, D. et. al. (1997), Analytical Biochemistry, 250, 203-211. Solche 3D-Gelpatcharrays werden durch Lösungspolymerisation geeigneter Acrylamidmonomere zwischen zwei Glasplatten erzeugt und chemisch auf einer Seite angebondet. Diese Glasoberflächen zeigen jedoch die oben erwähnte Hydrolyseempfindlichkeit und sind deshalb nur einmal für die Testung verwendbar. Außerdem sind diese Polyacrylamidgel-Arrays nicht für die chemische in situ Synthese der Sondenmoleküle eingesetzt worden. Die von uns entwickelten Kunststoffoberflächen/-folien sind gegen viele aggressive chemische Reagenzien und bei einem wässrigen pH von 0 bis 14 stabil. Immobilisierte oder an aufpolymerisierten Patches gebundene Sondenmoleküle können nicht mit wäßrigen Wasch-/Regenerationslösungen von der Kunststoffoberfläche/-folie abgelöst werden. Daher sind unsere auf Kunststoffoberfläche/-folie basierenden Arrays mehrmals verwendbar.

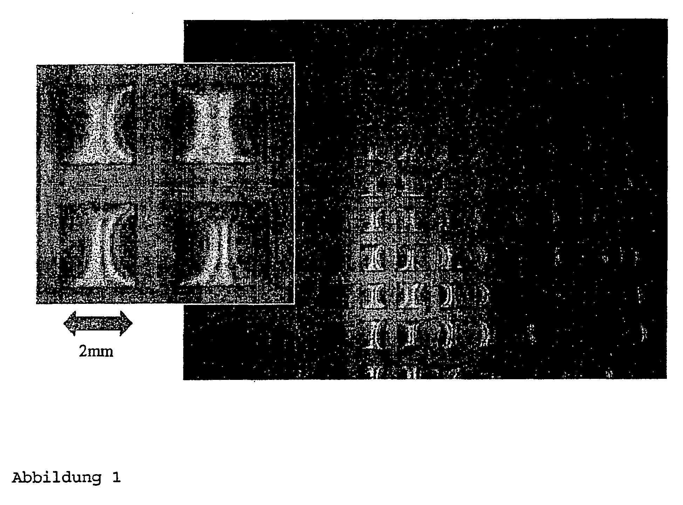

Nachstehend wird die Erfindung durch Beispiele und eine Abbildung näher erläutert. Abbildung 1 zeigt: Eine Polypropylenfolie mit einem Raster aus rechteckigen pfropf-polymerisierten Patches (2 x 2 mm). Die Patches der rechten Hälfte und der hervorgehobenen Fläche sind mit Wasser/Glycerin (1:1 / V:V) benetzt.

### Modifikation von Kunststoffoberfläche/-folie

Für die Synthese oder die kovalente Immobilisierung von Sondenmolekülen müssen auf der Kunststoffoberfläche funktionelle Gruppen erzeugt werden.

Eine Möglichkeit der Funktionalisierung von Kunststoffoberflächen ist die direkte Funktionalisierung von Polymeroberflächen mit dem Ziel der Generierung von Hydroxy- oder AminoGruppen und wurde bereits ausführlich im Patent "Vorrichtung zur effektiven Erzeugung von frei definierbaren Repertoires/Bibliotheken mit großen Anzahlen von Ligand- und Akzeptorstrukturen zur kombinatorischen Synthese und zur ultraschnellen Testdurchführung in der biologischen, biochemischen, pharmazeutischen, medizinischen und chemischen Wirkstofforschung" - Frank, R., Zander, N., Melberg, Y., Gausepohl, H., Schneider-Mergener, J. Adler, F., Türk, G. (Anmelder: ABIMED Analysen-Technik GmbH, GBF, Jerini Biotools GmbH, MediUm Tech GmbH) P (1) 98 18 999.0, PCT/EP 99/02 811 und in der dort zitierten Literatur beschrieben.

Darin wurden folgende Verfahren aufgeführt, die auch für o.g. Kunststoffoberflächen anwendbar sind:
1. Oxidation von PP, PE, PMP mit Chromtrioxid, Ozon, Wasserstoffperoxid/Trifluoressigsäure
2. Eliminierung von Fluorid aus PVDF
3. Reduktion von PTFE, PCTFE mit Naphtalin/Natrium oder Benzoin
4. Verseifung von EVA
5. Zusätzliche Hydroborierung von unter 1. - 3. beschriebenen Materialien
6. Direkte Hydroxylierung oder Aminierung von PP, PE, PMP mit Radiofrequenzplasma

Einige dieser Verfahren sind auch für eine strukturierende Modifikation von Kunstoffoberflächen eingesetzt worden (WO 99/58245). Besonders geeignet für die chemische Synthese und Immobilisierung von Sondenmolekülen sind Oberflächenmodifikationen mit primären Aminen, weil es hierfür eine Vielzahl an Reagenzien gibt, mit denen Sondenmoleküle oder Synthesebausteine mit solchen Aminofunktionen kovalent verknüpft werden können. Reaktionen zur Einführung von Aminogruppen mit Hilfe von Carboxyl- oder Hydroxyl-Funktionen sind bekannt und werden hier genutzt ("Method for producing polymeric solid phase supporting materials" - Ulbricht, M., Volkmer-Engert, R., Germeroth, L., Wenschuh, H., (Anmelder: Jerini Biotools GmbH) PCT Anmeldung WO 00/12575; "Derivatisierte Polymermaterialien - Frank, R., Matysiak, S. (Anmelder: GBF) P(1)96 38 085.5, PCT/EP 97/05123; US 269 002; EP 97 943 867.8; Korea 10-1999-7002279; Norwegen 99 1296; Australien 97.45 553).

Eine weitere Möglichkeit der Funktionalisierung von Kunststoffoberflächen ist die Pfropfpolymerisation. Dabei wird auf die Kunststoffoberfläche/-folie (Grundpolymer) eine weitere funktionalisierte. Polymerschicht aufgebracht. Die folgenden beschriebenen Verfahren wurden dafür erfolgreich angewendet: Für eine Übersicht der bei der durch W-Strahlung induzierten Pfropfpolymerisation angewendeten Photoinitiatoren siehe Fouassier, J.-P., Photoinitiation, Photopolymerisation and Photocuring, Hansers Publishers, Munich, Vienna, New York, 1995. Für eine Übersicht über die zur Funktionalisierung von Polymeren durch Photopolymerisation verwendeten Monomere siehe WO 00/12575. Diese Monomere sind für alle im weiteren aufgeführten Pfropfpolymerisationsverfahren geeignet.

Ein Verfahren zur Pfropfpolymerisation von z.B Acrylsäuremonomeren auf Polyethylenformkörpern durch Initiation mit Gammastrahlen wurde in WO 84/03564 beschrieben und für die Herstellung von Kunstoffträgern zur Synthese und Testung von Peptiden eingesetzt. Ein entsprechendes Verfahren für Polypropylenformkörper wurde in P (1) 98 18 999.0 offengelegt. Alle diese Verfahren wurden aber bisher nur für eine in unserem Sinne nicht strukturierende Modifizierung eingesetzt. Ein Spezialfall beschreibt WO 02/066984 A2. Durch kleinste Unebenheiten (Rauheit; Pixel; kleiner als 1/10 mm) auf einer Polypropylenoberfläche werden in einem sehr kurzen Pfropfpolymerisationsverfahren mit wässriger Acrylsäure kleine Büschel von Polyacrylat auf die erhobenen Stellen gesetzt, die von den hydrophoben Vertiefungen umgeben bleiben. Eine solche Fläche kann mit Tropfen von Flüssigkeiten benetzt werden. Ein Tropfen kann ein oder mehrere oder viele benachbarte Büschel benetzen; seine Ausbreitung ist aber durch die vielen schmalen hydrophoben Barrieren zwischen den Büscheln gegenüber einer homogen gepfropften Fläche eingeschränkt. Solche Pixel-Arrays wurden für die Immobilisierung von Peptiden und Proteinen mit Dichten von bis zu 0.25 mm eingesetzt. Die Unebenheiten auf der Polypropylenoberfläche sind nicht konstruiert sondern zufällig statistisch verteilt. Es handelt sich hier also hier um ein zufälliges Muster an hydrophilen Ankerpunkten, an denen die aufgegebenen Tropfen haften. Die chemischen Funktionen (Carbonsäurefunktionen) der Polyacrylatbüschel der benetzten Anker werden dann für die Immobilisierung der gelösten Sondenmoleküle (hier Peptide) benutzt. Die Anwendung solcher Pixel-arrays ist analog der konventioneller Arrays.

Für die Herstellung von strukturiert funktionalisierten Kunststoffoberflächen mit vorgegebener Formatierung für die automatisierte parallele *in situ* Synthese oder Immobilisierung einer Vielzahl von Sondenmolekülen und deren anschließende Anwendung für die simultane Affinitätsanreicherung und Isolierung biologischer Analyt- Moleküle aus komplexen Gemischen wird das folgende sehr einfache und sehr effiziente Verfahren vorgeschlagen.

Hydrophob/hydrophile Strukturierung von Kunststoffoberflächen Eine geeignete Kunststoffoberfläche für solch ein Array kann aus verschiedenen Polymeren sein, z.B. aus Polypropylen (PP), Polyethylen (PE), Polymethylpenten (PMP), Polytetrafluorethylen (PTFE, Teflon®), Polyamid (PA) in verschiedenen Schichtdicken und auch Farben, auch versetzt mit Zusätzen, welche Eigenschaften des Basismaterials verändern und damit die Einsatzmöglichkeiten solcher Materialien erweitern (z.B. mit einem Graphitzusatz versehenes Polypropylen, das aufgrund seiner Leitfähigkeit als Trägermaterial für MALDI-Massenspektrometrie eingesetzt werden kann, siehe P103 05 957.1); bevorzugt wird PP als Folie verwendet. Schichtdicke: 0,1 - 1,0 mm, bevorzugt 0,15 - 0,3 mm

Die Kunststoffoberfläche/-folie wird vor dem aufbringen der Maske gewaschen:
für 60 min - 7h mit insgesamt 3x Dimethylformamid (DMF), bevorzugt 3x 30 min
für 9 min - 1h mit 3x Ethanol, bevorzugt 3x 5 min und dann getrocknet.

Auf die Kunststoffoberfläche wird eine Maske aus einer Tinte oder einem Lack aufgetragen, die nur die zu modifizierenden Stellen (später die hydrophilen Bereiche/Patches) frei lässt. Bei der Tinte kann es sich z.B. um eine Tinte für Permanent Marker handeln, die sich mit einem Plotter, Drucker oder auch Stempel auf die Kunststoffoberfläche auftragen lässt. Das Muster entspricht dabei dem später gewünschten Aussehen des Arrays. Es kann zur Herstellung der Maske aber auch ein Photolack verwendet werden, sowohl ein Positiv-, als auch ein Negativ-Photolack. Dieser wird flächig auf die Kunststoffoberfläche aufgebracht und wird nach Trocknung entsprechend den Herstellerangaben noch mit UV-Licht belichtet und anschließend entwickelt. Ergebnis ist bei beiden Methoden eine Kunststoffoberfläche/-folie, die an den Stellen, an denen sich später die hydrophoben Barrieren befinden sollen, maskiert ist und an den Stellen, an denen sich später die hydrophilen Bereiche/Patches befinden sollen, frei von einer Maskierung ist. Die Größe der Bereiche/Patches lässt sich beliebig variieren. Desgleichen die Form der Fläche (z.B. Kreis, Quadrat, Rechteck oder Streifen). Für eine spätere manuelle Elution von Ziel-Biomolekülen empfiehlt sich eine Patch-Größe zwischen 0,3 x 0,3 mm und 2 x 2 mm. Jedoch lassen sich auch wesentlich kleinere, aber auch größere Patches herstellen. Entsprechend des Einsatzes der Photolithographie zur Herstellung der Maske ist die kleinste noch mögliche Patchgröße durch die für die Belichtung des Photolacks verwendete Wellenlänge gegeben. Für den Transfer entsprechen kleiner Flüssigkeitsvolumina auf und von solchen kleinen Patches müssten noch die geeigneten Werkzeuge entwickelt werden. Im Hinblick auf die Anwendung solcher Patch-Arrays ist wichtig, dass die Flüssigkeitstropfen auf den benetzten hydrophilen Patches nicht miteinander in Kontakt kommen. Dafür ist ein ausreichender Abstand (hydrophobe Stege) nötig. Diese sollten 1/10 bis 10/10 der kleinsten Ausdehnung des hydrophilen Patches betragen, bevorzugt ist 3 bis 5/10. Auch die Größe der Gesamtoberfläche, die strukturiert werden kann, ist in weiten Bereichen variierbar, von wenigen mm² bis zu m². Die Herstellung entsprechend großer geeigneter Gefäße für die Behandlung der Flächen ist unproblematisch .

Die so präparierten Kunststoffoberflächen/-folien werden mit Ozon begast.
Ozongehalt: 1 - 10 g/h, bevorzugt 3 - 5 g/h
Begasungszeit: 30 min - bis 10h, bevorzugt 2 - 4 h
Ozonquelle: Labor-Ozonisator 300.5 (Sander)

Die Kunststoffoberfläche/-folie wurde für die angegebene Begasungszeit bei ca. 20°C mit einem von der angegebenen Quelle stammendem Gasgemisch aus Ozon in Sauerstoff umströmt. Das Gasgemisch hatte den angegebenen Ozongehalt.

Es folgt das Entfernen der Maske von der Kunststoffoberfläche durch ein geeignetes Lösungsmittel, z.B. mit Ethanol (für Tinte) oder Aceton (für Photolacke und Tinte) und Trocknen der Kunststoffoberfläche/-folie im Luftstrom.

Mit Ozon als gasförmigem Reagenz können in sehr reproduzierbarer Weise und sehr gleichmäßig beliebig komplizierte Strukturen auf Oberflächen behandelt und hydrophilisiert werden. Es gibt keine Benetzungsprobleme wie sie mit flüssigen Reagenzien erfahren werden. Die so mit Ozon behandelten Kunststoffoberflächen/-folien zeigen jetzt schon an den nicht während der Ozonolyse abgedeckten Stellen eine höhere Hydrophilizität, als an den abgedeckten Stellen. Dies lässt sich durch Benetzung mit z.B. Wasser sichtbar machen.

Im Vergleich zu den bisher verwendeten Verfahren zur Erzeugung von hydrophob/hydrophilen Strukturen auf Oberflächen, wie sie z.B. in "Manual Manufacturing of Oligonucleotide, DNA, and Protein Microchips" - Guschin, D. et. al. (1997), Analytical Biochemistry, 250, 203-211, beschrieben sind, braucht bei dem hier beschriebenen Verfahren lediglich ein schnell und einfach auszuführender Schritt, das Aufdrucken/Stempeln/Plotten der Maske auf die Kunststoffoberfläche, durchgeführt werden. Bei den o.a. Verfahren muss erst immer noch eine hydrophobe Schicht auf der Glasoberfläche eingeführt werden, um dann die hydrophilen Strukturen dadurch abgrenzen zu können. Das hier beschrieben Verfahren nutzt die bereits hydrophobe Kunststoffoberfläche aus, um die Barrieren zu bilden.

Die Aktivierung von Kunststoffoberflächen mittels reaktiven Ionen- oder Elektronenstrahlen oder Plasma durch eine physikalische Maske ist in WO 94/05896 und auch in WO 99/58245 beschrieben. Diese Verfahren benötigen jedoch aufwendige Apparaturen, insbesondere wenn größere Flächen bearbeitet werden sollen. Eine chemische Oxidation von Polypropylen mittels Chromtrioxid-Lösung (hochtoxisch und krebserregend) wurde hier auch erwähnt, jedoch keine praktikable Lösung für eine strukturierte Modifikation vorgeschlagen.

Zudem können bei der Behandlung mittels Ozon wesentlich höhere Beladungen auf der Kunststoffoberfläche erzeugt werden. Beispielsweise kann man nach einer Ozonbehandlung für 8 Stunden und anschließender Reduktion zu Hydroxylgruppen eine Beladung von 10 bis 13 µnmol/cm² erreichen. Bei einer 8-stündigen Bestrahlung des gleichen Materials in einer Gammaquelle und nachfolgender Reduktion zu Hydroxylgruppen erhält man dagegen nur eine Beladung von 0,1 bis 0,2 nmol/cm². Da die Gammastrahlung jedoch das Maskenmaterial durchdringt, ist keine Strukturierung möglich. Gerade für den Einsatz der Affinitätsanreicherung ist aber die Beladung mit Funktionen und darüber mit Sondenmolekülen extrem wichtig. Die hohe flächenspezifische Ausbeute an Hydroxyfunktionen bei der Ozonbehandlung ist das Ergebnis der Eindiffusion der reaktiven Ozonmoleküle in das Plastikmaterial. In Abhängigkeit von der Behandlungsdauer und der Dichtigkeit des Plastikmaterials dringen die Ozonmoleküle in das Material ein und es wird daher eine entsprechend dicke Schicht der Oberfläche angegriffen und oxidativ umgesetzt. Hierin unterscheiden sich die hier beschriebenen Oberflächen von denen mit O₂-Plasmaverfahre hydrophilisierten Oberflächen, bei denen die reaktiven Plasmaionen nahezu nicht in das Material eindringen können und somit der Oxidationsvorgang nur auf die Oberfläche beschränkt ist, was mit einer entsprechend niedrigeren Ausbeute an Hydroxylfunktionen einhergeht.

Für die Verwendung im Sinne der Erfindung werden die so durch Ozonolyse oxidativ hydrophilisierten Oberflächenbereiche/Patche weitermodifiziert.

### A) Direkte Funktionalisierung der Kunststoffoberfläche:

Reduktion der bei der Ozonbehandlung gebildeten Peroxide/Hydroperoxide/Ozonide:
Reduktionsmittel: 0,5 - 3 mol/l Boran-Dimethylsulfid-Komplex, bevorzugt 1 mol/l
Lösungsmittel: Dichlormethan (DCM), Ethanol, Dimethylformamid (DMF), Methyl-tertiär-Buthylether (MTBE), bevorzugt Methyl-tertiär-Buthylether (MTBE)
Reaktionszeit: 2 - 28h, bevorzugt 14 - 16h
Reaktionstemperatur: 15 - 30°C, bevorzugt 20°C

Die zu reduzierenden Kunststoffoberflächen werden mit einer Lösung des angegebenen Reduktionsmittels mit dem angegebenen Lösungsmittel überschichtet und für die angegebene Zeit geschüttelt. Nach Abdekantieren der Reaktionslösung von der Kunststoffoberfläche wird mit Methyl-tertiär-Buthylether (MTBE) gewaschen und mit einer Lösung aus 3mol/l NaOH/H₂O/30%H₂O₂ (1:1:1, v/v/v) für 1 - 2 h behandelt. Danach wird mit 1N NaOH, 1N HCl, Wasser, Dimethylformamid (DMF) und Dichlormethan (DCM) gewaschen. Unter diesen Bedingungen können Beladungen an Hydroxylgruppen: von 0,1 -13,5 nmol/cm² erreicht werden.

Eine hohe Oberflächenkonzentration an funktionellen Gruppen führt zu einer erhöhten Hydrophilie der Oberfläche. Eine hohe Hydrophilie führt zu einer stärkeren Benetzung mit einem hydrophilen Lösungsmittel wie z. B. Wasser oder DMF und damit zu einer großen Ausbreitung selbst von kleinen Volumina. Für die eingesetzte Kunststoffoberfläche/-folie bedeutet das, daß z.B. Tropfen einer Reaktionslösung mit einem Synthesebaustein sehr weit verlaufen, und sich mit anderen Tropfen z.B. anderer Synthesebausteine vermischen können, wenn die Beladung an funktionellen Gruppen zu hoch ist. Durch das Vorsehen von hydrophoben Barrieren zwischen den einzelnen hydrophilen Patches wird dies jedoch verhindert. Die Reaktionslösung breitet sich nur auf dem Gebiet des hydrophilen Patches aus und wird an der Grenze zur hydrophoben Barriere von dieser aufgehalten. Die Tropfen können so nicht mehr ineinander laufen.

Diese Hydroxylfunktionen können benutzt werden, um durch Derivatisierung andere funktionelle Gruppen einzuführen. Die Vorgehensweise ist dabei analog zu den bei der Pfropfpolymerisation beschriebenen Verfahren zur Erzeugung von z.B. primären Aminofunktionen oder auch Aldehydgruppen (siehe unten).

### B) Strukturierte Pfropfpolymerisation der

### Kunatstoffoberfläche/-folie durch ein gängiges Polymerisationsverfahren

Durch die Synthese/Immobilisierung auf dreidimensionalen Patches kann eine höhere Beladung erreicht werden, als es bei der herkömmlichen Immobilisierung von Sondenmolekülen auf z.B. planaren Glasslides möglich ist. Eine bis zu 100-fach höhere Kapazität für eine Immobilisierung ist mit einem solch dreidimensionalen Polyacrylamidgelpatch zu erreichen, siehe hierzu: "Manual Manufacturing of Oligonucleotide, DNA, and Protein Microchips" - Guschin, D. et. al. (1997), Analytical Biochemistry 250, 203-211. Dadurch lassen sich größere Mengen an Sondenmolekülen auf der Oberfläche in situ synthetisieren oder immobilisieren, an denen später auch mehr Ziel-Biomoleküle angereichert werden können. Eine höhere Empfindlichkeit, als bei herkömmlichen planaren Arrays auf Glasflächen ist die Folge.

Das strukturierte Aufbringen einer Polymerschicht für solche 3D-Patcharrays konnte auf den durch A vorstrukturierten Kunststoffoberflächen durch Pfropfpolymerisation nach drei Verfahren erfolgreich durchgeführt werden.
1. durch Gamma-Strahlen initiierte Pfropfpolymerisation: Monomer: siehe "Method for producing polymeric solid phase supporting materials" - Ulbricht, M., Volkmer-Engert, R., Germeroth, L., Wenschuh, H., (Anmelder: Jerini Biotools GmbH) PCT Anmeldung WO 00/12575
   Monomerkonzentration: 1 - 30 Vol%, bevorzugt 5 - 10 Vol%
   Reaktionsgefäß: Glas
   Reaktionszeit: 8 - 96h, bevorzugt 48 - 72h
   Reaktionstemperatur: 10 - 50 °C, bevorzugt 25 - 30°C
   Lösungsmittel: Lösung aus 5mM Kupfer(II)-acetat in Wasser, Methanol, Ethanol, Eisessig, Dimethylsulfoxid (DMSO) oder Dimethylformamid (DMF), bevorzugt Dimethylsulfoxid (DMSO) Strahlenquelle: Irradiator OB29 (STS, Braunschweig, D) mit einem Cs137-Isotop und einer Dosisleistung von 204,6 Gy/h. Ein aufgeführtes Monomer bzw. ein Gemisch von angegebenen Monomeren wurde in einem angegebenen Lösungsmittel bzw. einem Gemisch von angegebenen Lösungsmitteln in der angegebenen Monomerkonzentration gelöst. Die Kunststoffoberflächen/-folien wurden in einem luftdicht verschlossenen Gefäß mit einer dieser Lösungen oder mit einem flüssigen Monomer oder einem flüssigen Gemisch aus Monomeren, welche alle gelöste Kupfer(II)-salze enthielten, überschichtet und mit einem Strom aus Argon oder Stickstoff weitgehend von Sauerstoff befreit. Dann wurde das Gefäß für die angegebene Zeit bei der angegebenen Temperatur mit von der angegebenen Quelle stammenden Gamma- Strahlung bestrahlt. Anschließend wurde die Kunststoffoberfläche/-folie mit 1N Natronlauge, 1N Salzsäure, Wasser und Ethanol gewaschen und dann getrocknet.
2. durch UV-Strahlung initiierte Pfropfpolymerisation: Monomer: siehe "Method for producing polymeric solid phase supporting materials" - Ulbricht, M., Volkmer-Engert, R., Germeroth, L., Wenschuh, H., (Anmelder: Jerini Biotools GmbH) PCT Anmeldung WO 00/12575
   Monomerkonzentration: 1 - 30 Vol%, bevorzugt 5 - 10 Vol%
   Reaktionsgefäß: eingeschweißt in einen entsprechend großen Polypropylenbeutel
   Bestrahlungszeit: 10 min - 24h, bevorzugt 30 min - 4h
   Reaktionstemperatur: 10 - 50 °C, bevorzugt Raumtemperatur (ca. 20°C)
   Lösungsmittel: Lösung aus 5mM Kupfer(II)-acetat in Wasser, Methanol, Ethanol, Eisessig, Dimethylsulfoxid (DMSO) oder Dimethylformamid (DMF), bevorzugt Wasser oder DMSO Photoinitiator: siehe Fouassier, J.-P., Photoinitiation, Photopolymerisation and Photocuring, Hansers Publishers, Munich, Vienne, New York, 1995, bevorzugt Benzophenon
   Photoinitiatorkonzentration: 0,01 - 1M, bevorzugt 0,05 - 0,3M
   Abstand der Kunststoffoberfläche/-folie zur Strahlenquelle: 10 - 90cm, bevorzugt, 25cm
   W-Strahlenquelle: Quecksilberhoch- bzw. -mitteldruck-Lampen, bevorzugt wassergekühlt, z.B. Heraeus TQ 150 und Heraeus Noblelight Vorschaltgerät.
   Ein aufgeführtes Monomer bzw. ein Gemisch von angegebenen Monomeren wurde in einem angegebenen Lösungsmittel bzw. einem Gemisch von angegebenen Lösungsmitteln in der angegebenen Monomerkonzentration gelöst. Die Kunststoffoberflächen/-folien wurden in einem luftdicht verschlossenen Gefäß mit einer dieser Lösungen oder mit einem flüssigen Monomer oder einem flüssigen Gemisch aus Monomeren, die alle einen angegebenen Photoinitiator bzw. ein Gemisch aus angegebenen Photoinitiatoren in der angegebenen Photoinitiatorenkonzentration enthielten, überschichtet und mit einem Strom aus Argon oder Stickstoff weitgehend vom Sauerstoff befreit. Dann wurde das Gefäß für die angegebene Zeit bei der angegebenen Temperatur mit der von der angegebenen Quelle stammenden UV-Strahlung bestrahlt. Anschließend wurde die Kunststoffoberfläche/-folie mit 1N Natronlauge, 1N Salzsäure, Wasser und Ethanol gewaschen und dann getrocknet.
3. durch thermische Zersetzung von durch Behandlung mit Ozon gebildeten Peroxiden/Hydroperoxiden/Ozoniden initiierte Pfropfpolymerisation:
   Monomer: siehe "Method for producing polymeric solid phase supporting materials" - Ulbricht, M., Volkmer-Engert, R., Germeroth, L., Wenschuh, H., (Anmelder: Jerini Biotools GmbH) PCT Anmeldung WO 00/12575
   Monomerkonzentration: 1 - 30 Vol%, bevorzugt 5 - 10 Vol% Reaktionsgefäß: Glas
   Reaktionszeit: 30 min - 72h, bevorzugt 16 - 24h Reaktionstemperatur: 60 - 110 °C, bevorzugt 75 - 100°C Lösungsmittel: Lösung aus 5mM Kupfer(II)-acetat in Wasser, Methanol, Ethanol, Eisessig, Dimethylsulfoxid (DMSO) oder Dimethylformamid (DMF), bevorzugt DMSO

Ein aufgeführtes Monomer bzw. ein Gemisch von angegebenen Monomeren wurde in einem angegebenen Lösungsmittel bzw. einem Gemisch von angegebenen Lösungsmitteln in der angegebenen Monomerkonzentration gelöst. Die Kunststoffoberflächen/-folien wurden in einem luftdicht verschlossenen Gefäß mit einer dieser Lösungen oder mit einem flüssigen Monomer oder einem flüssigen Gemisch aus Monomeren, die alle gelöste Kupfer(II)-salze enthielten, überschichtet und mit einem Strom aus Argon oder Stickstoff weitgehend von Sauerstoff befreit. Dann wurde das Gefäß für die angegebene Zeit bei der angegebenen Temperatur erhitzt. Anschließend wurde die Kunststoffoberfläche/-folie mit 1N Natronlauge, 1N Salzsäure, Wasser und Ethanol gewaschen und dann getrocknet.

Im Falle von Methode 1. - Pfropfpolymerisation durch GammaStrahlung initiiert, und von Methode 2. - Pfropfpolymerisation durch W-Bestrahlung initiiert, wird auf den während der Ozonolyse nicht abgedeckten Bereichen stärker polymerisiert, als auf den abgedeckten Bereichen. Auf den während der Ozonolyse mit der Maske abgedeckten Bereichen wird zwar auch bis zu einem gewissen Grad polymerisiert, aber das Ausmaß beträgt dort nur 10 bis 20% der Beladung der nicht bei der Ozonolyse abgedeckten Bereiche/Patches. Dieser Hydrophobizitätsunterschied reicht aus, damit die bei der Ozonolyse mit einer Maske abgedeckten Bereiche als hydrophobe Barriere für z.B. Reaktionslösungen fungieren können.

Dieses Ergebnis war recht überraschend, da normalerweise diese beiden Pfropfpolymerisationsmethoden erfolgreich mit unbehandelten Kunststoffoberflächen durchgeführt werden. Auch ohne Vorbehandlung/Aktivierung mit Ozon wird die Kunststoffoberfläche durchgängig pfropfpolymerisiert. Daß die ozonisierten Bereiche in einem viel stärkeren Maße zur Initiation der Pfropfpolymerisation neigen, als die nicht vorbehandelten und daß der daraus resultierende Hydrophobizitätsunterschied ausreicht, um hydrophobe Barrieren zu bilden, war so nicht zu erwarten.

Im Falle der Methode 3. - Pfropfpolymerisation initiiert durch thermische Zersetzung von durch Behandlung mit Ozon gebildeten Peroxiden/Hydroperoxiden/Ozoniden- wird nur auf den bei der vorherigen Ozonolyse nicht durch eine Maske verdeckten Bereichen polymerisiert. Die während der Ozonolyse mit einer Maske abgedeckten Bereiche/Barrieren/Stege werden überhaupt nicht polymerisiert. Der Hydrophobizitätsunterschied zwischen den hydrophilen, polymerisierten Bereichen/Patches der Kunststoffoberfläche und den nicht polymerisierten Bereichen/Barrieren ist somit weitaus größer, als bei den Methoden 1 und 3., bei gleich hoher Beladung der hydrophilen Bereiche/Patches.

Es sollte hier noch auf den Unterschied der 3D-Patches nach dem nach der Variante 3 beschriebenen Pfropfpolymerisationsverfahren und den zwischen Glasplatten erzeugten quervernetzten Polyacrylamid-Patcharrays nach Guschin et al. hingewiesen werden. Die Pfropfpolymerisation wurde hier ohne Zugabe von sogenannten Vernetzermonomeren (bifunktionelle Monomere) durchgeführt. Die auf der Kunststoffoberfläche aufgesetzten Polymerketten sind daher fast ausschließlich lineare Ketten und stehen wie Bürstenhaare nebeneinander. Alle chemischen Funktionen und daran immobilisierte Sondenmoleküle sind gut für die Ziel-Biomoleküle zugänglich. Die Erreichbarkeit ist sehr viel weniger durch Diffusion begrenzt, als dies bei den porigen quervernetzten Polyacrylamid-Patches nach Guschin et al. der Fall ist. Die nach Variante 1 und 2 erstellten Patches wurden zwar auch ohne Vernetzermonomere pfropfpolymerisiert, wegen der kontinuierlichen Erzeugung von Radikalen in der Lösung muß aber mit einer deutlich stärkeren Quervernetzung gerechnet werden (H. Waniczek in Houben-Weyl, Band E20, S. 646, 1987). Dies wird aber erheblich geringer ausfallen, als bei den gezielt quervernetzten Gel-Patches nach Guschin et al.

Die durch Pfropfpolymerisation erreichten Funktionalitäten der Patches wurden indirekt nach weiterer Derivatisierung (siehe unten) bestimmt und liegen zwischen 5 bis 250 nmol/cm². Durch weitere Verringerung oder Erhöhung der Ozonvorbehandlung kann der Bereich von 0,1 bis 1000 nmol/cm² erweitert werden.

### Weitere Derivatisierung der modifizierten

### Kunststoffoberflächen

Je nach eingesetztem Monomer erhält man nach der Pfropfpolymerisation eine Kunststoffoberfläche/-folie mit einer dem eingesetzten Monomer entsprechenden Funktionalität, z.B. mit Hydroxyl-, Carboxyl- oder auch Aminofunktionen. Die nach A durch direkte Funktionalisierung erzeugten Patches bieten Hydroxylfunktionen.

Braucht man für die *in situ* Synthese oder Immobilisierung auf der Oberfläche jedoch andere funktionelle Gruppen, als die durch die Modifizierung zugänglichen, so werden die vorhandenen funktionellen Gruppen so derivatisiert, daß die angestrebte Funktionalisierung erreicht wird. Z.B. können die auf der Oberfläche durch Pfropfpolymersiation aufgebrachten Hydroxylgruppen benutzt werden, um primäre Aminogruppen einzuführen, wie in "Derivatisierte Polymermaterialien - Frank, R., Matysiak, S. (Anmelder: GBF.) P(1)96 38 085.5, PCT/EP 97/05123; US 269 002; EP 97 943 867.8; Korea 10-1999-7002279; Norwegen 99 1296; Australien 97.45 553 beschrieben. Die Funktionalisierung zu primären Aminen über den Umweg von aufpolymerisierten Hydroxylgruppen hat gegenüber der Pfropfpolymerisation mit einem schon eine primäre Aminogruppe enthaltenem Monomer den Vorteil, dass höhere Beladungen erreicht werden können. Diese höhere Beladung wiederum ist günstiger für die folgende in situ Synthese oder Immobilisierung von Sondenmolekülen und schließlich erlaubt sie auch einen empfindlicheren Nachweis von Ziel-Biomolekülen aus komplexen Gemischen.

### Derivatisierung von Hydroxylfunktionen:

Die Kunststoffoberfläche/-folie, die freie Hydroxylgruppen trägt wird mit N,N'-Carbonyldiimidazol (CDI) umgesetzt und so aktiviert.
Reaktionslösung: 0,2 bis 0,7 mol/l N,N'-Carbonyldiimidazol, bevorzugt 0,4 bis 0,5 mol/l in einem geeignetem Lösungsmittel, wie N-Methylpyrrolidinon (NMP), Dimethylsulfoxid (DMSO), Aceton oder Dimethylformamid (DMF), bevorzugt Dimethylformamid (DMF)
Reaktionszeit: 60 min - 16h, bevorzugt 4 - 6h
Reaktionstemperatur: 20 - 35°C, bevorzugt 25°C

Die Kunststoffoberfläche/-folie mit den direkt erzeugten oder aufpolymerisierten Hydroxylfunktionen wird mit der oben angegebenen Lösung versetzt und für die angegebene Zeit geschüttelt. Anschließend wird die Kunststoffoberfläche/-folie mit dem ausgewählten Lösungsmittel und abschließend mit Ethanol gewaschen und getrocknet.

Die so modifizierte und aktivierte Kunststoffoberfläche/-folie kann nun mit der gewünschten funktionellen Gruppe versehen werden, indem ein Molekül eingeführt wird, welches mindestens zwei funktionelle Gruppen enthält, von der eine die gewünschte spätere Funktion aufweist und die andere, bevorzugt eine Aminogruppe, dazu dient, dieses Molekül kovalent an die aktivierte Kunststoffoberfläche zu binden. So sind die unterschiedlichsten funktionellen Gruppen zugänglich, wie z.B. primäre Aminofunktionen, Aldehydfunktionen, Carboxylfunktionen.

### Einführung primärer Aminogruppen :

Verwendete Diamine: 1,4-Diaminocyclohexan, 1,3-Diaminopropan, 1,4-Phenylendiamin, 1,12-Diaminododecan
Reaktionslösung: eines der aufgeführten Diamine mit einer
Konzentration von 0,25 - 1,5 mol/1, bevorzugt 0,5 - 1,0mol/l Lösungsmittel: Ethanol, Dimethylformamid (DMF), Dimethylsulfoxid (DMSO), Wasser, bevorzugt Dimethylformamid (DMF)
Reaktionszeit: 4 - 72h, bevorzugt 16h
Reaktionstemperatur: 20 - 35°C, bevorzugt 25°C

Die mit CDI aktivierte Kunststoffoberfläche wird mit der angegebenen Lösung der angegebenen Diamine versetzt und man lässt für die angegebene Zeit unter Schütteln reagieren. Anschließend wird mit dem gewählten Lösungsmittel und mit Ethanol gewaschen.

Erreichte Beladung der Kunststoffoberfläche/-folie mit freien Aminofunktionen durch oben beschriebene Methoden: 5 - 250 nmol/cm².

Durch den Einsatz unterschiedlicher langer Diamine läßt sich der Abstand der aufzubringenden Sondenmoleküle von der Kunststoffoberfläche bestimmen. Dies ist zum Beispiel wichtig, wenn relativ große Sondenmoleküle auf der Oberfläche synthetisiert oder immobilisert werden sollen. Bei einem zu kleinen Abstand zwischen Sondenmolekül und Oberfläche können unter Umständen größere Sondenmoleküle nur mit Problemen oder gar nicht an die Oberfläche angelagert werden, z.B. weil aufgrund ihrer räumliche Struktur die Bindungsstellen im Molekül bis zu einem gewissen Grad abgeschirmt sind. In diesem Fall erreicht man mit Einbau eines längeren Abstandmoleküls trotzdem eine Anbindung des Sondenmoleküls. Darüber hinaus ist ein größerer Abstand zur Oberfläche auch vorteilhaft bei der Bindung (Affinitätsanreicherung) großer Ziel-Biomoleküle wie Proteine oder gar Bakteriophagen.

Die Einführung von Aldehydgruppen ist ebenfalls über den Umweg einer Derivatisierung von direkt erzeugten oder aufpolymerisierten Hydroxylgruppen möglich. Die mit CDI aktivierte Kunststoffoberfläche/-folie wird dazu mit einem Molekül umgesetzt, das eine funktionelle Gruppe, bevorzugt eine Aminogruppe, enthält, über die es an die Kunststoffoberfläche/-folie kovalent gebunden werden kann und anschließend durch eine weitere chemische Reaktion ein Teil des Moleküls so verändert/modifiziert wird, dass eine Aldehydgruppe gebildet wird (maskierte Aldehydgruppe) . Z.B. können Aminozucker, wie D(+)-Glucosamin-hydrochlorid oder auch D-Mannosamin-hydrochlorid über die im Molekül vorhandene Aminofunktion kovalent an die mit CDI modifizierte Kunststoffoberfläche/-folie gebunden werden und anschließend über eine Spaltung mit Natriumperjodat der Zuckerring so aufgebrochen werden, dass freie Aldehydgruppen entstehen.

### Kovalente Bindung des Aminozuckers an die

### Kunststoffoberfläche:

Aminozucker: D(+)-Glucosamin-hydrochlorid, D-Mannosamin-hydrochlorid, bevorzugt D(+)-Glucosamin-hydrochlorid Reaktionslösung: 0,1 - 1,0mol/l Lösung eines Aminozuckers,
bevorzugt 0,2 - 0,4 mol/l
Lösungsmittel: Dimethylsulfoxid (DMSO), Dimethylformamid (DMF), Wasser, bevorzugt Wasser
Reaktionszeit: 60 min - 24h, bevorzugt 16 - 18h

Einer der oben angegebenen Aminozucker wird in einem der angegebenen Lösungsmittel in der entsprechenden Konzentration gelöst. Nach Einstellen des pH-Wertes mit 1N Natronlauge auf pH 8 wird die vorher mit CDI modifizierte Kunststoffoberfläche/-folie in diese Lösung gegeben und man lässt für die angegebene Zeit reagieren. Anschließend wird die Kunststoffoberfläche/-folie mit dem gewählten Lösungsmittel und mit Ethanol gewaschen und getrocknet.

### Perjodspaltung des nun kovalent gebundenen Zuckers auf der Kunststoffoberfläche:

Reaktionslösung: 15 - 20Vol% Essigsäure in Wasser, bevorzugt 17Vol%
Konzentration an Natriummetaperjodat in der Reaktionslösung: 0,1 - 0,5 mol/l, bevorzugt 0,3 mol/l
Reaktionszeit: 60 sec - 15 min, bevorzugt 8 - 10 min

Die mit einem Aminozucker derivatisierte Kunststoffoberfläche/-folie wird mit der oben angegebenen Reaktionslösung versetzt und die angegebene Zeit geschüttelt. Anschließend wird die Kunststoffoberfläche/-folie mit Wasser und mit Ethanol gewaschen.

Es ist aber auch beispielsweise möglich, die auf der Oberfläche direkt erzeugten oder aufpolymerisierten Hydroxylfunktionen mit Pyridiniumchlorochromat (PCC) zu oxidieren und so Aldehydgruppen zu erhalten, allerdings mit einer deutlich geringeren Ausbeute.

### Aufbringen der Sondenmoleküle

Auf den funktionalisierten Kunststoffoberflächen, bzw. auf den hergestellten Patches, werden durch geeignete Synthesemethoden Substanzen entweder direkt synthetisiert (z.B. durch schrittweise Peptidsynthese) oder auf der Oberfläche immobilisiert (z.B. durch chemische Bindung, über einen Linker) oder adhesiv abgelagert.

Für die Synthese kommen Sondenmoleküle der unterschiedlichsten Art in Frage, z.B. Peptide, Peptid-Analoge, wie Peptoide und Peptomere, PNA, Oligonucleotide, DNA, organische Moleküle, synthetische Verbindungen, Naturstoffe, Oligosaccharide.

Auf einer mit primären Aminogruppen funktionalisierten Oberfläche können z.B. Peptide mit Hilfe der ortsgerichteten kombinatorischen chemischen Festphasensynthese, wie dem SPOT-Syntheseverfahren synthetisiert werden. Siehe hierzu: "Verfahren zur schnellen Synthese von trägergebundenen oder freien Peptide oder Oligonucleotiden, damit hergestelltes Flachmaterial, dessen Verwendung sowie Vorrichtung zur Durchführung des Verfahrens" - Frank, R. und Güler, S. (Anmelder: verkauft an Jerini Biotools GmbH, 1999) P 40 27 657.9, EP 91 914 577.1, US 5,830,637, Australia 96.42063, Japan 03.513 489, Norway 93.0613, Canada 2 090 485, Korea 93.700 613. Spot-Synthesis: An easy technique for the positionally addressable, parallel chemical synthesis on a membran-support - Frank, R. (1992) Tetrahedron, 48, 9217-9232. Für die Immobilisierung kommen die gleichen Sondenmoleküle in Frage, wie für die Synthese. Als Oberfläche kann man z.B. eine Kunststoffoberfläche/-folie mit freien Aldehydgruppen verwenden, an die das Sondenmolekül, das mit einer entsprechenden Hydrazino- oder Hydroxylaminogruppe vorliegt, kovalent zu Hydrazonen oder Oximen gebunden wird. Es ist aber auch möglich, eine Immobilisierung eines Sondenmoleküls zu erreichen, indem man mit einem sogenannten Crosslinker arbeitet. Dabei kann es sich z.B. um Succinimidyl 4-(N-maleimidomethyl) cyclohexan-1-carboxylate (SMCC) handeln. Dieses wird erst an die Aminooberfläche der Kunststoffoberfläche/-folie gebunden und erlaubt dann aufgrund einer zweiten reaktiven Gruppierung in seinem Molekül die Anbindung eines Sondenmoleküls mit einer geeigneten funktionellen Gruppe. Im Falle von SMCC ist dies eine freie SH-Funktion, wie sie z.B. in Cysteinresten vorkommt. Einen Überblick über die vielfältigen Methoden und Reagenzien gibt G.T. Hermanson in "Bioconjugate Techniques; 1995 Acadamic Press Inc." oder S.S. Wong in "Chemistry of Protein Conjugation and Cross-Linking; 1991 CRC Press Inc.

### Beispiel: Immobilisierung eines Sondenmoleküls auf einer Kunststoffoberfläche mit freien Aldehydfunktionen:

Eine mit Aldehydfunktionen strukturiert modifizierte Kunststoffoberfläche/-folie wird mit einem Peptid, das so funktionalisiert wurde, dass es als N-terminales Hydrazin oder C-terminales Hydrazid vorliegt, umgesetzt. Das N-hydrazino-Peptid oder Peptid-C-hydrazid wird in einem Zitronensäure-Phosphat-Puffer, pH 6,0, gelöst und auf die Patches der Kunststoffoberfläche mit freien Aldehydfunktionen getüpfelt. Nach 2 bis 20 Stunden Reaktionszeit wird die Kunststoffoberfläche mit Wasser, Dimethylformamid (DMF) und Ethanol gewaschen und getrocknet. Unter Ausbildung eines Hydrazons erhält man eine kovalente Bindung des Peptides an die modifizierte Kunststoffoberfläche/-folie.

### Multiple Affinitätsanreicherung

Die so hergestellten Kunststoffoberflächen/-folien eignen sich aufgrund der einzeln voneinander abgetrennten Orte, auf denen jeweils ein anderes Sondenmolekül oder ein anderes Gemisch von Sondenmolekülen aufgebracht ist, für die Analyse von komplexen biologischen Proben. Solche komplexen biologischen Proben können z.B. Proteine aus Extrakten, Antikörper aus polyklonalen Seren, Nukleinsäuren (DNA, RNA) aus biologischen Proben oder aus in vitro Experimenten (PCR-Produkte, Restriktionsfragmente), Phagenbibliotheken und auch Oligosaccharid-Präparationen sein.

Das Array von Patches mit den immobilisierten Sondenmolekülen wird ganzflächig mit der Probe inkubiert, so dass die Ziel-Biomoleküle ihre Bindungspartner finden können und sich dort spezifisch anheften. Überschüssige Probe wird durch Waschprozeduren entfernt. Nach dieser Affinintätsanreicherung der Ziel-Biomoleküle aus dem komplexen Gemisch, sind die Ziel-Biomoleküle entsprechend ihrer bevorzugten Bindungspartner an den Sondenmolekülen gebunden. Jetzt können die gebundenen Ziel-Biomoleküle ortsgerichtet abgelöst werden. Die Ablösung erfolgt durch aufbringen einer die Wechselwirkung zwischen den Sondenmolekülen und den Ziel-Biomolekülen dissoziierenden Lösung. Z.B. kann eine Lösung von Guanidinhydrochlorid die Wechselwirkungen zwischen auf der Kunststoffoberfläche befindlichen Peptiden als Sondenmolekülen und daran gebundenen Phagen aufbrechen. Die Phagen kann man so ablösen und für die weitere Analyse von der Oberfläche eluieren. Dabei sorgen die hydrophoben Barrieren/Stege zwischen den hydrophilen Bereichen/Patches mit den Sondenmolekülen und den darauf gebunden Ziel-Biomolekülen für eine sichere Abtrennung der einzelnen Volumina an Elutionslösung voneinander. So können Tropfen der Elutionslösung des einen Sondenmoleküles nicht mit den Tropfen der Elutionslösung, die sich auf einem zweiten Sondenmolekül befindet, vermischen, und damit auch nicht die sich in dieser Elutionslösung befindlichen Ziel-Biomoleküle. Die Information, welche Ziel-Biomoleküle an welchem Sondenmolekül gebunden haben, bleibt erhalten. Nach Elution der Ziel-Biomoleküle kann die Kunststoffoberfläche/-folie nach entsprechenden Waschschritten wieder verwendet werden. Arbeitet man mit sehr empfindlichen Ziel-Biomolekülen, die z.B. nicht austrocknen dürfen, weil sie sonst denaturieren, wie das z.B. bei Bakteriophagen oder auch Zellen der Fall ist, so lässt man die Waschlösungen nach der Affinitätsanreicherung so auf der Kunststoffoberfläche/-folie verbleiben, dass jedes Patch von einem Lösungsmitteltropfen bedeckt bleibt. Dies ist automatisch der Fall, wenn die überstehende Flüssigkeit nur einfach ablaufen gelassen wird. Alternativ können auch Flüssigkeitstropfen mit einer Pipette manuell oder automatisch aufgegeben werden. Aufgrund der hydrophoben Barrieren/Stege zwischen den hydrophilen Bereichen/Patches, sind die Orte mit den einzelnen Sondenmolekülen klar abgegrenzt. Die hydrophoben Stege selber sind nicht benetzt (Abbildung 1).

### Beispiel Phagenanreicherung:

Es wurde das gleiche Experiment durchgeführt, wie es in Bialek et al. (Anal Bioanal Chem (2003) 376 : 1006.1013) für die Verwendung eines Peptidarrays auf einer Zellulosemembran beschrieben wurde.

Die drei Ligandpeptide (Ac-SFEFPPPPTDEELRL- für die EVH1-Domäne; Ac-GTPPPPYTVG- für die hYAP-WW-Domäne; Ac-PPPPPPPLPAPPPQP- für die rFE65-WW-Domäne) sowie das Kontrollpeptid (Ac-NRPPPAVGPQPAP-) wurden jeweils auf einem von vier benachbarten Patches auf einer PP-Folie synthetisiert; die 2x2 mm großen Patches wurden durch Ozonolyse und thermische Pfropfpolymerisation (Variante 3) erzeugt und aminofunktionalisiert (ca. 2 nmol je Patch); die Peptide wurden wie in Frank & Overwin beschrieben (SPOT-Synthesis: Epitope analysis with arrays of synthetic peptides prepared on cellulose membranes (1996) In: Methods in Molecular Biology, Vol. 66: Epitope Mapping Protocols (G. E. Morris, Ed.), The Humana Press Inc., Totowa, USA, 149-169.) chemisch aus den geschützten Fmoc-Aminosäurebausteinen aufgebaut. Das Patch-Peptidarray wurde in einem 2ml-Eppendorfgefäß mit 2ml Blockierungspuffer für 1h bei Raumtemperatur unter vorsichtiger Bewegung auf einem Schütteltisch behandelt.

Es wurde eine Mischung von jeweils 9x10⁸ T7-Phagen, welche die Proteindomänen EVH1, hYAP-WW und rFE65-WW präsentieren, mit jeweils 3x10¹⁰ Phagen, welche die indifferenten Proteine (Maus Il-4, Fas-Antigen and Ezrin) präsentieren, in 1.8 ml LB Medium angefertigt. Diese Mischung wurde mit 0.2ml 5-fach konzentriertem Blockierungspuffer versetzt und 10 min bis 1 h vorsichtig geschüttelt. Dann wurde das blockierte Patch-Peptidarray zu dieser Phagenmischung gegeben und bei 4°C über Nacht unter vorsichtiger Bewegung auf einem Schütteltisch behandelt.

Danach wurde die Phagenmischung abdekantiert und das Array 5-mal für je 5 min mit Blockierungspuffer, 5-mal für je 5 min mit TBST (25 mM Tris-HCl pH 7.4, 150 mM NaCl, 0.1% Tween 20) und 1-mal für 5 min mit TBS (25 mM Tris-HCl pH 7.4, 150 mM NaCl) gewaschen. Das Patch-Peptidarray wurde in eine Petrischale mit TBS gelegt und überschüssiges TBS seitlich abgesaugt bis nur noch die Tropfen auf den Patches verblieben. Nacheinander wurde der Tropfen auf den Patches abgenommen, durch 2 µl 1M Guanidiniumhydrochlorid ersetzt, diese nach 1 min wieder abpipettiert und die jetzt phagenhaltige Lösung in 250 µl LB-Medium verdünnt. Dieser Vorgang wurde für jedes Patch 3-mal wiederholt, so dass letztlich jeweils 6 µl Phageneluat von jeden Patch in den viermal je 250 µl Volumina LB-Medium gesammelt wurde.

100 µl von den 250 µl wurden benutzt um serielle Verdünnungen in LB-Medium bis 1:100 anzufertigen, welche dann in Petrischalen auf Agar mit *E. coli* BL 5615 Rasen ausplattiert wurden. Die Zahl der von jedem Peptid-Patch eluierten Phagen wurde über die Zahl der Löcher (plaques) im *E. coli* Rasen bestimmt. Von 20 zufällig ausgewählten Phagenplaques von jedem Peptid-Patch wurde jeweils durch PCR und Agarose-Gelelektrophorese die Größe des DNA-Inserts im Phagengenom bestimmt; diese Größe ist charakteristisch für die Proteindomäne die auf dem jeweiligen Pagen präsentiert wird und bekannt. Als Ergebnis erhielten wir:
Ac-SFEFPPPPTDEELRL- für die EVH1-Domäne 2.5x10⁴ Phagen, 14von14 korrekt
Ac-GTPPPPYTVG- für die hYAP-WW-Domäne; 2,4x10³ Phagen, 19von20 korrekt
Ac-PPPPPPPLPAPPPQP für die rFE65-WW-Domäne 7x10³ Phagen, 16von20 korrekt
Ac-NRPPPAVGPQPAP- für das Kontrollpeptid 200

Dies Ergebnis entspricht sehr gut dem, welches von Bialek et al. mit dem Peptidarray auf Zellulose erhalten wurde. Die niedrigen Werte vom Kontrollpeptid sind sogar noch besser. Das Zellulose-Array musste zu diesem Zweck zerschnitten werden, damit die Phagen individuell von den einzelnen Peptidspots eluiert werden konnten.

Patch-Arrays für die miniaturisierte parallele Zellkultur Unsere strukturiert modifizierten Kunststoffoberflächen wurden auch vorteilhaft eingesetzt, um zum Beispiel Zellen auf den Patches auszusäen und dann individuell durch Zugabe von verschiedenen Reagenzien zu behandeln.

### Herstellen eines Patch-Arrays mit adherenten Fibroblasten-Zellen

Eine Polypropylenfolie, die durch maskierte Ozonolyse und Reduktion mit hydroxylierten Patches von 2x2mm Größe versehen war, wurde mit einer 0.1mg/ml Lösung von poly-L-Lysin in Wasser (Sigma-Aldrich) überschichtet. Nach Abtropfen des Überschusses wurden die mit Flüssigkeit benetzten Patches 1h bei Raumtemperatur in einem geschlossenen Gefäß (z.B. Petrischale) inkubiert. Danach wurde gut mit PBS (137 mM NaCl, 2.7 mM Na₂HPO₄, 8.1 mM KCl, 1.5 mM KH₂PO₄) und Wasser gewaschen und an der Luft getrocknet. Alternativ kann auch eine entsprechende Folie, bei der die Hydroxy-Patches mit CDI voraktiviert sind, verwendet werden; hier wird das polyL-Lysin kovalent mit den Patches verknüpft.

Diese beschichteten Folien können durch UV-Bestrahlung nach Angaben der Hersteller der Bestrahlungsgeräte sterilisiert werden. 3Y1 Zellen (eine embryonale Fibroblastenzelllinie aus der Ratte) wurden wie von Nagakawa und Miyamoto (Cell Struct. Funct. 23, 1998, 283-290) beschrieben kultiviert. Mit einer Resuspension dieser Zellen wurde eine der poly-L-Lysin beschichteten PP-Folien überschichtet und der Überschuss abgetropft. Die sich an die Poly-L-Lysin-Patches anhaftenden Zelle wurde 1 bis 15 h inkubiert und im Mikroskop gezählt. Zur Vermeidung des Austrocknens wurde die Folie mit den Patches im Inkubator über einer Schale mit dem gleichen Zellkulturmedium gelagert. Durch die einfache Prozedur des Überschichtens und Abtropfens wurden nahezu gleiche Zahlen von Zellen auf jedem Patch angesiedelt.

Die so kultivierten Zellen können durch Zugabe von externen Substanzen auf ihre Reaktion auf diese Substanzen überprüft werden. Dafür gibt es mehrere Möglichkeiten:
A) Die Substanzen werden vorher auf den Patches synthetisiert. Hierzu wird zunächst ein spezieller Linker eingeführt, der nach der Synthese und dem Ansiedeln der Zellen orthogonal durch z.B. Licht oder pH-Veränderung gespalten werden kann und so das Syntheseprodukt in das Kulturmedium auf dem Patch entlässt. Da die Verteilung der Zellen nach dem Verfahren des Überschichtens und Abtropfens sehr schnell durchführbar ist, brauchen die Linker nicht sehr stabil sein. Solche Linker sind dem Fachmann aus der Literatur zur chemischen Festphasensynthese bekannt. Die Synthese führt man analog zu Frank & overwin durch.
B) Die Substanzen werden vorher auf den Patches immobilisiert. Auch hier werden spezielle Verknüpfungen gewählt, die während der Ansiedelung der Zellen stabil genug sind und erst danach zur Spaltung induziert werden können. Da die Verteilung der Zellen nach dem Verfahren des Überschichtens und Abtropfens sehr schnell durchführbar ist, brauchen die Verknüpfungen nicht sehr stabil sein. Hier können z.B. licht-, pH-, enzymatisch- oder allgemein hydrolyseempfindliche Verknüpfungen genutzt werden. Solche chemischen Verknüpfungen sind dem Fachmann z.B. aus der Literatur zu Schutzgruppenchemie oder der Konjugationschemie bekannt.
C) Die Substanz werden nach dem Ansiedeln der Zellen dazu pipettiert. Hierzu können konventionelle Ein- oder Mehrnadel-Pipettierroboter eingesetzt werden.

## Patentansprüche

1. Gegenstand aus einem hydrophoben Kunststoff und mit planer Oberfläche, die mit einer Vielzahl von hydrophilen Bereichen versehen ist, die voneinander durch hydrophobe Barrieren/Stege der nicht-modifizierten Kunststoffoberfläche, deren Ausdehnung ¹/₁₀ bis ¹⁰/₁₀ der kleinsten Ausdehnung eines hydrophilen Bereichs beträgt, abgegrenzt sind, wobei die Kunststoffoberfläche für die Immobilisierung oder Bindung von Sondenmolekülen zur Funktionalisierung mit Hydroxy-Gruppen einer Plasma-Behandlung oder einer Ozonolyse unterworfen worden ist.

2. Gegenstand nach Anspruch 1, wobei die Vielzahl hydrophiler Bereiche und die hydrophoben Barrieren ein Raster bilden.

3. Gegenstand nach mindestens einem der vorhergehenden Ansprüche, wobei es sich bei dem Kunststoff um Polyethylen (PE), Polypropylen (PP), Polymethylpenten (PMP), Polytetrafluorethylen (PTFE; Teflon) oder Polyamid handelt.

4. Gegenstand nach mindestens einem der vorhergehenden Ansprüche, wobei der Gegenstand gefärbt ist.

5. Gegenstand nach mindestens einem der vorhergehenden Ansprüche, wobei der Kunststoff einen Gehalt an anorganischem Material, insbesondere Graphit, und/oder organischem Material, insbesondere an inertem anorganischem und/oder organischem Material aufweist.

6. Gegenstand nach mindestens einem der vorhergehenden Ansprüche, wobei der Gegenstand als Flachmaterial vorgesehen ist, das gegebenenfalls auf einem Träger aufgebracht ist.

7. Gegenstand nach Anspruch 6, wobei der Gegenstand als Folie vorgesehen ist.

8. Gegenstand nach mindestens einem der vorhergehenden Ansprüche, wobei die Größe jedes hydrophilen Bereichs einem von einer Pipette abgebbaren und den Bereich benetzenden Flüssigkeitsvolumen oder der Größe einer lebenden Zelle entspricht.

9. Gegenstand nach mindestens einem der vorhergehenden Ansprüche, wobei die hydrophilen Bereiche Sondenmoleküle tragen, die zu einer simultanen Affinitätsanreicherung und Isolierung von Analyt-Molekülen geeignet sind.

10. Gegenstand nach mindestens einem der vorhergehenden Ansprüche, wobei die Sondenmoleküle auf den hydrophilen Bereichen immobilisiert oder an die hydrophilen Bereiche gebunden sind.

11. Gegenstand nach mindestens einem der vorhergehenden Ansprüche, wobei die Kunststoffoberfläche für die kovalente Immobilisierung oder Bindung von Sondenmolekülen funktionalisiert ist.

12. Gegenstand nach Anspruch 11, wobei der Gegenstand zur Funktionalisierung mit einer Maske versehen worden ist, welche den vorzusehenden hydrophoben Barrieren entspricht bzw. diese hydrophoben Barrieren vorgibt, und der maskierte Gegenstand, soweit er nicht maskiert worden ist, einer Funktionalisierung unter Ausbildung der hydrophilen Bereiche unterworfen worden ist.

13. Gegenstand nach Anspruch 11 oder 12, wobei die Kunststoffoberfläche mit Hydroxy-, Amino- (insbesondere NH₂-Gruppen), Carboxyl-, Aldehyd- oder Keto-Gruppen als funktionellen Gruppen versehen worden ist.

14. Gegenstand nach Anspruch 13, wobei die Oberfläche mit 0,5 bis 15 und insbesondere 0,1 bis 13,5 nanomol Hydroxy-Gruppen/cm² versehen worden ist.

15. Gegenstand nach mindestens einem der Ansprüche 12 bis 14, wobei die Kunststoffoberfläche weiterhin mit funktionellen Gruppen versehen worden ist, indem eine mit funktionellen Gruppen versehene Polymerschicht auf die funktionalisierte Kunststoffoberfläche aufgepfropft worden ist.

16. Gegenstand nach Anspruch 15, wobei das Aufpfropfen in Abwesenheit von Vernetzern, insbesondere von bifunktionellen Monomeren durchgeführt worden ist.

17. Gegenstand nach mindestens einem der vorhergehenden Ansprüche, wobei die Sondenmoleküle auf die funktionalisierte Kunststoffoberfläche durch Synthese, durch Immobilisierung oder durch Adhäsion aufgebracht worden sind.

18. Gegenstand nach Anspruch 17, wobei die Sondenmoleküle durch eine Stufensynthese aufgebracht worden sind.

19. Gegenstand nach Anspruch 17, wobei die Sondenmoleküle durch chemische Bindung immobilisiert worden sind, insbesondere über einen Linker.

20. Gegenstand nach Anspruch 17, wobei die Sondenmoleküle nicht abwaschbar adhäsiv aufgebracht worden sind.

21. Gegenstand nach mindestens einem der Ansprüche 10 bis 19, wobei als Sondenmoleküle Peptide, Peptid-Analoge, insbesondere Peptoide und/oder Peptomere, PNA, Oligonucleotide, DNA, organische Moleküle, Naturstoffe und/oder Oligosaccharide aufgebracht worden sind.

22. Gegenstand nach mindestens einem der vorhergehenden Ansprüche, wobei die Sondenmoleküle von hydrophilem Bereich zu hydrophilem Bereich verschieden sind oder wobei von hydrophilem Bereich zu hydrophilem Bereich verschiedene Sondenmolekül-Gemische vorgesehen sind.

23. Gegenstand nach mindestens einem der vorhergehenden Ansprüche mit einer planen Oberfläche einer Größe im Bereich von 1mm² bis 1m², insbesondere von einigen mm² bis einigen cm².

24. Verfahren zur Herstellung eines Gegenstandes aus Kunststoff und mit planer Oberfläche, die mit einer Vielzahl von hydrophilen Bereichen versehen ist, die voneinander durch hydrophobe Barrieren abgegrenzt sind, und der zur Beschickung mit Sondenmolekülen funktionalisiert worden ist, wobei man von einem hydrophoben Kunststoff ausgeht, den Gegenstand mit einer Maske versieht, welche den vorzusehenden hydrophoben Barrieren entspricht bzw. diese hydrophoben Barrieren vorgibt, und den Gegenstand, soweit er nicht maskiert worden ist, funktionalisiert, indem man hydrophilisiert.

25. Verfahren nach Anspruch 24, wobei man hydrophilisiert, indem man Hydroxy-, Amino-, Carboxyl-, Aldehyd- oder Keto-Gruppen vorsieht.

26. Verfahren nach Anspruch 25, wobei man den bereichsweise hydrophilisierten Gegenstand einer Pfropfpolymerisation unterwirft, mit der man ihrerseits Hydroxy-, Amino-, Carb-oxyl-, Aldehyd- oder Keto-Gruppen vorsieht.

27. Verfahren zur Herstellung eines Gegenstandes gemäß mindestens einem der Ansprüche 1 bis 23, bei dem man von einem hydrophoben Kunststoff ausgeht, insbesondere einem Kunststoff gemäß Anspruch 3, und den Kunststoff mit Sondenmolekülen versieht, indem man Merkmale gemäß mindestens einem der Ansprüche 1 bis 23 vorsieht.

28. Verfahren zur Herstellung eines Gegenstandes aus Kunststoff nach einem der Ansprüche 24 bis 28, wobei man den Gegenstand mit Sondenmolekülen versieht.

29. Verwendung eines Gegenstandes nach mindestens einem der vorhergehenden Ansprüche für eine simultane Affinitätsanreicherung oder Affinitätsreinigung und Isolierung von Analyt-Teilchen, insbesondere von biologischen Analyt-Teilchen, vorzugsweise Molekülen, Proteinen, Antikörpern, Nucleinsäuren, Phagen, Oligosacchariden oder Zellen.

30. Verwendung nach Anspruch 29, wobei man nach der Affinitätsanreicherung oder Affinitätsreinigung individuell pro hydrophilem Bereich eine Elutionslösung aufbringt und das jeweilige Analyt-Teilchen isoliert.

31. Verwendung nach Anspruch 29 oder 30, wobei man die Affinitätsanreicherung oder Affinitätsreinigung und/oder die Isolierung der Analyt-Teilchen automatisiert durchführt.

32. Verwendung nach mindestens einem der Ansprüche 29 bis 31, wobei man den von Analyt-Teilchen befreiten Gegenstand erneut zur Affinitätsanreicherung oder Affinitätsreinigung verwendet.

## Claims

1. Hydrophobic plastic object having a planar surface that is provided with a plurality of hydrophilic areas, which are separated from each other by hydrophobic barriers of the non-modified plastic surface, their dimension being ¹/₁₀ to ¹⁰/₁₀ of the smallest dimension of a hydrophilic area, wherein the plastic surface, for the immobilization or binding of probe molecules, has been subjected to a plasma treatment or an ozonolysis for functionalization with hydroxy groups.

2. Object according to claim 1, wherein the plurality of hydrophilic areas and the hydrophobic barriers form a grid.

3. Object according to at least one of the preceding claims, wherein the plastic is polyethylene (PE), polypropylene (PP), polymethylpentene (PMP), polytetrafluoroethylene (PTFE; Teflon) or polyamide.

4. Object according to at least one of the preceding claims, wherein the object is colored.

5. Object according to at least one of the preceding claims, wherein the plastic has a content of inorganic material, especially graphite, and/or organic material, especially an inert inorganic and/or organic material.

6. Object according to at least one of the preceding claims, wherein the object is provided as a flat material, which is optionally applied to a support.

7. Object according to claim 6, wherein the object is a film.

8. Object according to at least one of the preceding claims, wherein the size of each hydrophilic area corresponds to the volume of a liquid that can be emitted by a pipette and wets the area, or is equivalent to the size of a living cell.

9. Object according to at least one of the preceding claims, wherein the hydrophilic areas carry probe molecules, which are suitable for a simultaneous affinity enrichment and isolation of analyte molecules.

10. Object according to at least one of the preceding claims, wherein the probe molecules are immobilized on the hydrophilic areas or are bound to the hydrophilic areas.

11. Object according to at least one of the preceding claims, wherein the plastic surface is functionalized for covalent immobilization or binding of probe molecules.

12. Object according to claim 11, wherein the object has been provided with a mask for functionalization, which mask is equivalent to the hydrophobic barriers to be provided or provides said hydrophobic barriers, and the masked object, insofar as it has not been masked, is subjected to a functionalization under formation of hydrophilic areas.

13. Object according to claim 11 or 12, wherein the plastic surface has been provided with hydroxy, amino (especially NH₂-groups), carboxyl, aldehyde or keto groups as functional groups.

14. Object according to claim 13, wherein the surface has been provided with 0.5 to 14 and especially 0.1 to 13.5 nanomoles of hydroxy groups/cm².

15. Object according to at least one of the claims 12 to 14, wherein the plastic surface has been further provided with functional groups by grafting a polymer layer that is provided with functional groups onto the functionalized plastic surface.

16. Object according to claim 15, wherein the grafting has been carried out in the absence of cross-linking agents, especially bi-functional monomers.

17. Object according to at least one of the preceding claims, wherein the probe molecules have been applied to the functionalized plastic surface by synthesis, by immobilization, or by adhesion.

18. Object according to claim 17, wherein the probe molecules have been applied by a stepwise synthesis.

19. Object according to claim 17, wherein the probe molecules have been immobilized by chemical binding, especially via a linker.

20. Object according to claim 17, wherein the probe molecules have been applied adhesively as to be non-washable.

21. Object according to at least one of the claims 10 to 19, wherein peptides, peptide analogues, especially peptoides and/or peptomers, PNA, oligonucleotide, DNA, organic molecules, natural products and/or oligosaccharides have been applied as probe molecules.

22. Object according to at least one of the preceding claims, wherein the probe molecules vary from hydrophilic area to hydrophilic area, or wherein different probe molecules are provided from hydrophilic area to hydrophilic area.

23. Object according to at least one of the preceding claims, the planar surface ranging in size from 1 mm² to 1m², especially from a few mm² to some cm².

24. Method for producing a plastic object having a planar surface that is provided with a plurality of hydrophilic areas, which are separated from each other by hydrophobic barriers, and functionalized to be provided with probe molecules, wherein one starts from a hydrophobic plastic, provides the object with a mask which corresponds to the hydrophobic barriers to be provided or provides said hydrophobic barriers, and functionalizes the object, insofar as it has not been masked, by hydrophilizing.

25. Method according to claim 24, wherein one hydrophilizes by providing hydroxy, amino-, carboxyl-, aldehyde- oder keto groups.

26. Method according to claim 25, wherein the area-wise hydrophilized object is subjected to a graft polymerization which graft polymerization provides hydroxy, amino, carboxyle, aldehyde or keto groups.

27. Method for producing an object according to at least one of claims 1 to 23, wherein one starts from a hydrophobic plastic, especially a plastic according to claim 3, and provides the plastic with probe molecules by providing features according to at least one of claims 1 to 23.

28. Method for producing a plastic object according to one of claims 24 to 28, wherein the object is provided with probe molecules.

29. Use of an object according to at least one of the preceding claims for a simultaneous affinity enrichment or an affinity purification and isolation of analyte particles, especially biological analyte particles, preferably molecules, proteins, antibodies, nucleic acids, phages, oligosaccharides or cells.

30. Use according to claim 29, wherein an elution solution is applied individually to each hydrophilic area after affinity enrichment or affinity purification, and the respective analyte particle is isolated.

31. Use according to claim 29 or 30, wherein the affinity enrichment or affinity purification and/or isolation of the analyte particles is carried out automatized.

32. Use according to at least one of claims 29 to 31, wherein the object that is freed from the analyte particles is reused for an affinity enrichment or affinity purification.

## Revendications

1. Produit à base d'une matière synthétique hydrophobe et avec une surface plane, qui est pourvue d'un grand nombre de zones hydrophiles qui sont délimitées les unes des autres par des barrières/passerelles hydrophobes de surfaces de matière synthétique non modifiée dont l'étendue s'élève de 1/10 à 10/10 de la plus petite étendue d'une zone hydrophile, les surfaces de matière synthétique ayant été soumises à un traitement par plasma ou à une ozonolyse pour l'immobilisation ou la fixation de molécules sondes en vue de la fonctionnalisation avec des groupes hydroxy.

2. Produit selon la revendication 1, la grande quantité de zones hydrophiles et les barrières hydrophobes formant une grille.

3. Produit selon au moins l'une des revendications précédentes, la matière synthétique impliquée étant du polyéthylène (PE), du polypropylène (PP), du polyméthylpentène (PMP), du polytétrafluoroéthylène (PTFE ; Teflon) ou du polyamide.

4. Produit selon au moins l'une des revendications précédentes, le produit étant teinté.

5. Produit selon au moins l'une des revendications précédentes, la matière synthétique présentant une quantité de matière inorganique, en particulier, du graphite, et/ou de matière organique, en particulier de matière inorganique et/ou organique inerte.

6. Produit selon au moins l'une des revendications précédentes, le produit étant prévu être un matériau plat qui peut être éventuellement rapporté sur un support.

7. Produit selon la revendication 6, le produit étant prévu être une feuille.

8. Produit selon au moins l'une des revendications précédentes, la taille de chaque zone hydrophile correspondant à un volume de liquide délivré par une pipette mouillant la zone ou correspondant à la taille d'une cellule vivante.

9. Produit selon au moins l'une des revendications précédentes, les zones hydrophiles portant des molécules sondes qui sont appropriées pour une concentration par affinité et pour un isolement simultané de molécules d'analyte.

10. Produit selon au moins l'une des revendications précédentes, les molécules sondes étant immobilisées sur les zones hydrophiles ou liées aux zones hydrophiles.

11. Produit selon au moins l'une des revendications précédentes, la surface de la matière synthétique étant fonctionnalisée pour l'immobilisation covalente ou la liaison de molécules sondes.

12. Produit selon la revendication 11, le produit ayant été pourvu d'un masquage pour la fonctionnalisation, qui correspond aux barrières hydrophobes à prévoir, respectivement, qui préforme ces barrières hydrophobes, et le produit masqué,
là où il n'a pas été masqué, avoir été soumis à une fonctionnalisation par le développement des zones hydrophiles.

13. Produit selon les revendications 11 ou 12, la surface de la matière synthétique ayant été pourvue de groupes hydroxy, amino-(en particulier des groupes NH₂), carboxyle, aldéhyde ou cétone en tant que groupes fonctionnels.

14. Produit selon la revendication 13, la surface ayant été pourvue avec 0,5 à 15, et, en particulier, 0,1 à 13,5 nanomoles de groupes hydroxy par cm².

15. Produit selon au moins l'une des revendications de 12 à 14, la surface de la matière synthétique ayant en outre été pourvue de groupes fonctionnels, en faisant tomber par gouttes une couche de polymère munie de groupes fonctionnels sur la surface de matière synthétique fonctionnalisée.

16. Produit selon la revendication 15, le goutte à goutte étant effectué en l'absence d'agents de réticulation, en particulier de monomères bifonctionnels.

17. Produit selon au moins l'une des revendications précédentes, les molécules sondes étant rapportées sur la surface fonctionnalisée de la matière synthétique par immobilisation ou par adhésion.

18. Produit selon la revendication 17, les molécules sondes ayant été rapportées par une synthèse en étapes.

19. Produit selon la revendication 17, les molécules sondes ayant été immobilisées par une liaison chimique, en particulier au moyen d'un lieur.

20. Produit selon la revendication 17, les molécules sondes étant devenues non lessivables, étant introduites de manière adhésive.

21. Produit selon au moins l'une des revendications de 10 à 19 où des peptides, des analogues de peptides, en particulier des peptoïdes et/ou des peptomères, des PNA, des oligonucléotides, de l'ADN, des molécules organiques, des produits naturels et/ou des oligosaccharides sont introduits en tant que molécules sondes.

22. Produit selon au moins l'une des revendications précédentes, les molécules sondes étant différentes d'une zone hydrophile à l'autre, ou des molécules sondes différentes étant prévues d'une zone hydrophile à l'autre.

23. Produit selon au moins l'une des revendications précédentes avec une surface plane d'une taille de l'ordre de 1 mm² à 1 m², en particulier de quelques mm² à quelques cm².

24. Procédé de fabrication d'un produit en matière synthétique et avec une surface plane qui est munie d'un grand nombre de zones hydrophiles qui sont séparées les unes des autres par des barrières hydrophobes, et qui a été fonctionnalisée avec des molécules sondes pour le chargement, où on emploie comme produit de départ une matière synthétique hydrophobe, on munit le produit d'un masquage qui correspond aux barrières hydrophobes à prévoir, respectivement, on préforme ces barrières hydrophobes, et on fonctionnalise le produit, là où il n'a pas été masqué, en effectuant une hydrophilisation.

25. Procédé selon la revendication 24 où on hydrophilise en munissant de groupes hydroxy, amino, carboxyle, aldéhyde ou cétone. »

26. Procédé selon la revendication 25 où l'on soumet le produit hydrophilisé par zones à une polymérisation par greffage, par laquelle, pour sa part, on munit de groupes hydroxy, amino, carboxyle, aldéhyde ou cétone.

27. Procédé de fabrication d'un produit selon au moins l'une des revendications de 1 à 23 dans lequel on emploie comme produit de départ une matière synthétique hydrophobe, en particulier une matière synthétique selon la revendication 3, et on munit la matière synthétique de molécules sondes, en prévoyant des caractéristiques selon au moins l'une des revendications 1 à 23.

28. Procédé de fabrication d'un produit en matière synthétique selon l'une des revendications 24 à 28 où on munit le produit de molécules sondes.

29. Utilisation d'un produit selon au moins l'une des revendications précédentes pour la concentration par affinité simultanée ou la purification par affinité et l'isolement de particules d'analytes, en particulier de particules d'analytes biologiques, de préférence des molécules, des protéines, des anticorps, des acides nucléiques, des phages, des oligosaccharides ou des cellules.

30. Utilisation selon la revendication 29 où, après la concentration par affinité ou la purification par affinité, l'on apporte une solution d'élution individuelle par zone hydrophile et on isole la particule d'analyte respective.

31. Utilisation selon les revendications 29 ou 30 où l'on effectue de manière automatique la concentration par affinité ou la purification par affinité et/ou l'isolement des particules d'analytes.

32. Utilisation selon au moins l'une des revendications 29 à 31 où l'on réemploie le produit libéré des particules d'analytes pour la concentration par affinité ou la purification par affinité.
